# EUROPÄISCHE PATENTSCHRIFT

(11) **EP 2 184 199 B1**
(45) Veröffentlichungstag und Bekanntmachung des Hinweises auf die Patenterteilung: **26.10.2011**
(21) Anmeldenummer: 08405278.6
(22) Anmeldetag: 08.11.2008
(51) Int. Cl.: B60K 17/28, B60K 25/02, B62D 51/00

(54) **Selbstfahrende lenkbare Arbeitsmaschine**
Self-propelled steerable working machine
Véhicule automoteur de travail dirigeable

(43) Veröffentlichungstag der Anmeldung: 12.05.2010
(73) Patentinhaber: Rapid Technic AG, CH-8956 Killwangen (CH)
(72) Erfinder: Häfeli, Christian, CH- 6332 Hagendorn (CH)
(74) Vertreter: Fenner, Werner

(56) Entgegenhaltungen:
- DE-A1- 19 803 547
- DE-A1-102004 015 277

## Beschreibung

Die Erfindung betrifft eine selbstfahrende, lenkbare Arbeitsmaschine für das Fortbewegen und/oder Antreiben von Arbeitsgeräten, mit einem Antriebsmotor und wenigstens einer von diesem hydraulisch oder elektrisch antreibbaren, beidseits eines Maschinengehäuses quer zur Fortbewegungsrichtung in abstehend befestigten Achsstummeln gelagerten Fahrachse, an deren freien Enden jeweils ein mittels Hydraulikpumpe von einem Hydraulikmotor oder ein mittels Generator von einem Elektromotor angetriebenes, mit einer in den Achsstummeln gelagerten Antriebswelle verbundenes Rad angeordnet ist, und einer mit dem Antriebsmotor mittels zuschaltbarem, ein- oder mehrstufigen Getriebe verbindbaren, in dem Maschinengehäuse gelagerten Arbeitswelle für die an dem Maschinengehäuse befestigbaren Arbeitsgeräte, **wobei** eine Motorwelle **mit der Pumpen- resp. Generatorantriebswelle sowie mittels kuppelbarem Kupplungsrotor einer Schaltkupplung mit einem Antriebsrad des Getriebes antriebsverbunden ist**

Arbeitsmaschinen der eingangs beschriebenen Art werden für die Land- und/oder Forstwirtschaft, zum kommunalen und privaten Gebrauch sowie für den Garten- und den Landschaftsbau universell und speziell eingesetzt und auch als Zugmaschine verwendet. Sie eignen sich für den Transport von Gütern genauso wie für die Bearbeitung und Pflege von Feldern, Fluren und/oder Aeckern, bei der Futterernte und anderen landwirtschaftlichen Produkten resp. Tätigkeiten und lassen sich von einer Person einfach bedienen und für verschiedene Arbeiten, wie beispielsweise die Heuwerbung, den Ackerbau resp. die Bodenbearbeitung, den Strassenunterhalt sowie den Wintereinsatz und zum Transport mit Anhängern etc. umrüsten. Die Rapid Technic AG bietet derartige Arbeitsmaschinen beispielsweise mit der Bezeichnung Swiss oder Euro auch für den Einsatz in Berggebieten und anderen anforderungsreichen Geländen an.

In der vorveröffentlichten CH-A-696511 **resp.** DE 10 2004 015 277 A1 ist eine unter diese Gattung fallende Maschine mit einem Verbrennungsmotor beschrieben. Diese weist eine quer zur Fortbewegungsrichtung angeordnete, an den Enden befestigte Räder aufweisende Fahrachse auf und kann an Führungsholmeh bedient resp. geführt und gelenkt werden.

Bei der Verwendung eines Generators zum Antrieb der Räder der Arbeitsmaschine eignet letztere beispielsweise auch zur Ausführung handwerklicher Arbeiten mit Elektrogeräten.

Vorbekannt ist auch ein in der DE 198 03 547 A1 beschriebenes Motorfahrzeug, insbesondere ein Einachsmotorfahrzeug, das mit einem Mähwerk ausgebildet ist und einen Verbrennungsmotor besitzt, von dessen Abtriebswelle die Antriebswelle eines hydrostatischen Getriebes und eine Zapfwelle für das Arbeitsgerät antreibbar sind.

Wer solche Arbeitsmaschinen beispielsweise für das Mähen und Ernten von Halmgut verwendet, hat erfahren, dass ein relativ hoher manueller Kraftaufwand notwendig ist, um eine Arbeit ausführen und gleichzeitig die Maschine bedienen.zu können. Deshalb sind die Anforderungen an den Betrieb und die Bedienung der Maschine durch eine einfache Konstruktion und die Maschine bedienerfreundlich zu gestalten.

Damit stellt sich die Aufgabe, eine Arbeitsmaschine zu schaffen, die sich durch einen kompakten und einfachen Aufbau der Antriebsteile und komponenten, eine zweckmässige Bedienbarkeit und eine hohe Zuverlässgkeit auszeichnet und deren Konstruktion die Montage und die Zugänglichkeit beim Unterhalt der Maschine vereinfacht.

Selbstverständlich beschränkt sich die Aufgabe nicht auf einachsige Maschinen, es sind von ihr auch zweiachsige Arbeitsmaschinen betroffen, die von einem Fahrersitz aus lenkbar und bedienbar sind.

Erfindungsgemäss wird diese Aufgabe dadurch gelöst, dass das Maschinengehäuse eine Trennwand zwischen zwei trennbaren Gehäuseteilen aufweist, derart, dass der eine Gehäuseteil als Kupplungskammer ausgebildet ist, in der die Schaltkupplung angeordnet ist, und der andere Gehäuseteil als Getriebekammer ist, in der das Getriebe angeordnet ist, und dass der andere Gehäuseteil zur einseitigen Lagerung einer Motorwelle und Pumpenantriebswelle koaxial verbindenden Zwischenwelle vorgesehen ist und dass eine mit einem Kupplungsrotor der Schaltkupplung verbundene und auf der Zwischenwelle gelagerte Antriebsmuffe die Trennwand durchsetzt Damit kann gegenüber dem Stand der Technik ein erheblicher technischer Fortschritt bei der Herstellung und dem Unterhalt sowie der Baugrösse solcher Maschinen erzielt werden.

Es erweist sich als vorteilhaft, wenn die vorgeschlagene Arbeitsmaschine als Schaltkupplung eine durch Reibungs- oder Formschluss betätigbare mechanische oder elektromechanische Kupplung aufweist. Solche werden in verschiedenen Ausführungen als Antriebselemente angeboten und entsprechend ausgewählt.

Eine weitere Vereinfachung in der Bauweise kann dadurch erreicht werden, wenn die Schaltkupplung als elektromagnetische Kupplung ausgebildet ist, die einen dem Kupplungsrotor zugewandten, von einem stationären Kupplungsgehäuse getragenen Elektromagneten und eine auf der gegenüberliegenden Seite des Kupplungsrotors angeordnete, mit dem Antriebsrad des Getriebes verbundene Ankerscheibe aufweist.

Als besonders unterhaltsfreundlich und einfache Ausführung erweist sich die Arbeitsmaschine, wenn die Ankerplatte mit einer auf der Zwischenwelle lagernden Antriebsmuffe verbunden ist, wodurch eine gute Servicezugänglichkeit gewährleistet ist.

Die Antriebsmuffe ist vorteilhaft als Hohlwelle ausgebildet, in der die Zwischenwelle gelagert oder hindurchgeführt wird, wodurch einfache Montageverhältnisse geschaffen werden und geringerer Raumbedarf erforderlich wird, der sich für die Baugrösse als günstig erweist

Vorteilhaft ist das an der Antriebsmuffe befestigte Antriebsrad des Getriebes als Riemenscheibe, Ketten- oder Zahnrad ausgebildet, sodass ein anspruchsloser Antrieb der Arbeits- oder Zapfwelle konstruiert werden kann.

Es erweist sich als robuste Vorrichtung, wenn die Antriebsmuffe durch ein flanschartiges Ende ausgebildet ist, das sich auf einfache Art über die Ankerplatte mit dem Kupplungsrotor verbinden und bedarfsfalls austauschen lässt.

Zweckmässig kann die Zwischenwelle in der der Hydraulikpumpe zugewandten Wand des Maschinengehäuses gelagert sein, an deren Aussenseite die Hydraulikpumpe befestigt werden kann.

Das Maschinengehäuse ist in eine Kupplungskammer, in der die Schaltkupplung, und in eine Getriebekammer, in der das Getriebe angeordnet ist, getrennt, sodass es möglich ist, die Kupplungskammer trocken zu halten und die Getriebekammer mit einem Schmiermittel zu versehen. Damit eine dichte Trennung der Kammern entstehen kann, sind Wellendichtungen zu verwenden.

Hierzu ist zwischen den Kammern eine Trennwand vorgesehen, die zur Aufnahme einer auf die Antriebsmuffe einwirkende Wellendichtung ausgebildet ist, und in der Antriebsmuffe eine auf die Zwischenwelle einwirkende Wellendichtung angeordnet.

Zur Optimierung der Montage und der Zugänglichkeit im Getriebebereich ist das Maschinengehäuse zweiteilig ausgebildet, wobei dem einen Teil die Kupplungskammer und dem anderen Teil die Getriebekammer zugeordnet ist und zwischen den Teilen vorzugweise eine Dichtung angeordnet ist.

Selbstverständlich ist für die in der Getriebekammer einenends gelagerte Arbeitswelle auf ähnliche Art eine Wellendichtung vorgesehen, die die Getriebekammer dicht hält.

Im Sinne einer kompakten Bauweise ist der Antriebsmotor, ein Verbrennungsmotor, an der Kupplungskammer des Maschinengehäuses befestigt, vorzugsweise derart, dass die Motorwelle in das Kupplungsgehäuse ragt.

Als Getriebe eignet sich ein Riemen-, Ketten- oder Zahnradgetriebe, sodass das an der Antriebswelle befestigte resp. mit dieser verbundene Antriebsrad als Riemenscheibe, Ketten- oder Zahnrad ausgebildet sein kann.

Für ein unterstützendes Abbremsen der Arbeitsgeräte nach dem Ausschalten der Schaltkupplung oder des Antriebsmotors ist beispielsweise eine auf die Ankerplatte einwirkende Bremsvorrichtung vorgesehen, die vorteilhaft an der Trennwand zwischen Kupplungs- und Getriebekammer oder an dem Kupplungsgehäuse befestigt ist, selbstverständlich dem Kupplungsrotor oder der Ankerplatte zugewandt.

Als zweckmässig erweist sich beispielsweise ein als Bremsvorrichtung verwendeter Permanentmagnet, der benachbart oder an der Seite der Ankerplatte angeordnet ist, einfachheitshalber an der Trennwand resp. an dem Maschinengehäuse oder an dem Kupplungsgehäuse befestigt.

Im Zusammenhang mit einer kompakten Ausgestaltung ist auch die Lagerung der Arbeitswelle in deren Antriebsbereich zu berücksichtigen, während sie anderenends in einem halsförmigen Stutzen des Maschinengehäuses gelagert ist.

Hierzu ist die Getriebekammer zur einseitigen Lagerung der Arbeitswelle ausgebildet.

Vorteilhaft ist an der von der einseitigen Lagerung der Arbeitswelle abgekehrten Seite ein im Gehäuse angeordnete und auf die Arbeitswelle einwirkende Wellendichtung vorgesehen.

Von einer alternativen Ausführungsform des Erfindungsgegenstandes ist hauptsächlich eine den Antriebsmotor und die Hydraulikpumpe resp. einen Generator verbindende Zwischenwelle betroffen, indem ein in Achsrichtung auf einen Längsabschnitt der Zwischenwelle formschlüssig aufschiebbarer, und die Antriebswelle der Hydraulikpumpe resp. des Generators formschlüssig einsteckbar verbindender Aufsteckteil ausgebildet ist.

Vorteilhaft ist der Aufsteckteil der einfachheithsiber rohrförmig ausgebildet und weist jeweils wenigstens einen Keil auf, durch den der Längsabschnitt der Zwischenwelle einerseits und die Antriebswelle der Hydraulikpumpe resp. des Generators andererseits verbunden sind.

Vorzugsweise ist die entlang der Zwischenwelle angeordnete Antriebsmuffe als Hohlachse ausgebildet und im Maschinengehäuse zweifach gelagert, wodurch einfache Antriebsverbindungen zwischen Antriebsmotor und Hydraulikpumpe resp. Generator sowie zwischen Antriebsmotor und Getriebe entstehen.

Bei einem aus zwei Gehäuseteilen bestehenden Maschinengehäuse erweist es sich als zweckmässig, wenn die Antriebsmuffe auf beide Gehäuseteile verteilt gelagert ist.

Durch eine zweiteilige Gehäuseform kann für das dazwischen angeordnete Getriebe eine Kammer gebildet werden, so dass sie zur Aufnahme von Oel verwendbar ist.

Nachfolgend wird die Erfindung unter Bezugnahme auf den zitierten resp. Den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: einen auszugsweisen Längsschnitt durch eine einachsige Arbeitsmaschine mit einer von einem Riemengetriebe ange- triebenen Arbeitswelle,
- Fig. 2: einen auszugsweisen Längsschnitt durch eine einachsige Arbeitsmaschine mit einer von einem einstufigen Zahnrad- getriebe angetriebenen Arbeitswelle,
- Fig. 3: einen auszugsweisen Längsschnitt durch eine einachsige Arbeitsmaschine mit einer von einem mehrstufigen Zahnrad- getriebe angetriebenen Arbeitswelle,
- Fig. 4: einen Querschnitt durch die Fahrachse einer in den Fig. 1 bis 3 dargestellten Arbeitsmaschine und
- Fig. 5: einen auszugsweisen Längsschnitt durch eine einachsige Ar- beitsmaschine mit einer mehrteiligen Zwischenwelle.

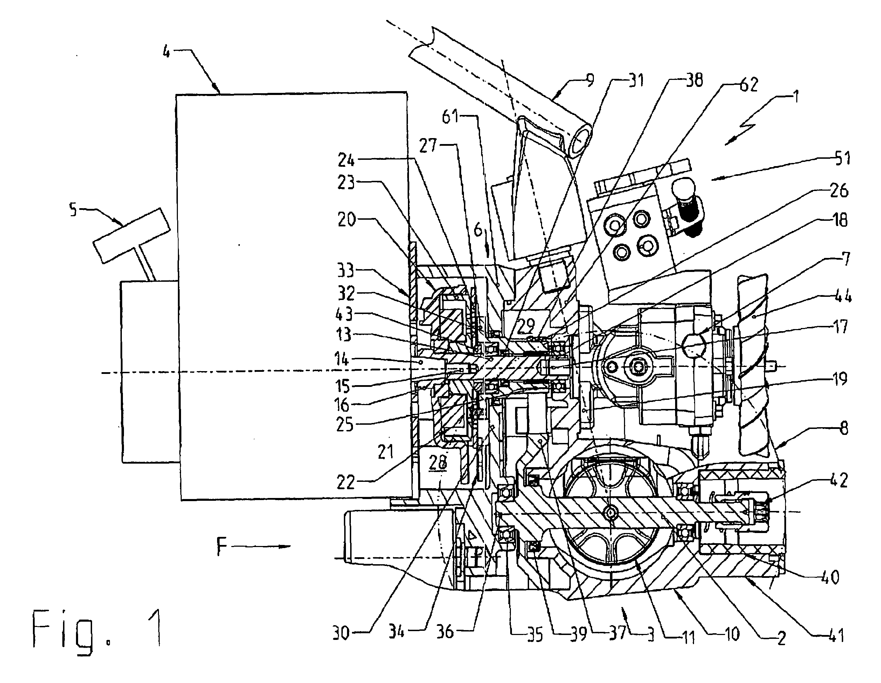

Die sich in Einzelheiten unterscheidenden Fig. 1 bis 3 und 5 sowie Fig. 4 zeigen auszugsweise eine selbstfahrende, vorzugsweise an Holmen manuell lenkbare, einachsige Arbeitsmaschine 1 für das Fortbewegen und/oder Antreiben von Arbeitsgeräten an einer Arbeits- oder Zapfwelle 2, eine Arbeitsmaschine nach der gattungsgleichen Art der CH-A-696 511 und CH-A-691 052.

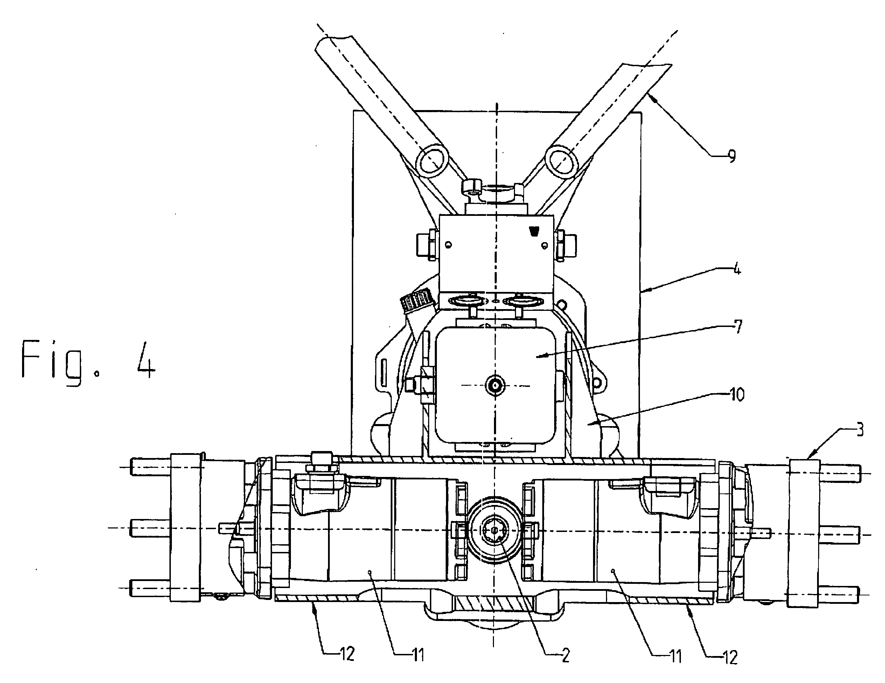

Die vorliegende Arbeitsmaschine 1 besteht aus einer quer zu der Fortbewegung F -sowohl vorwärts als auch rückwärts- angeordneten Fahrachse 3 und einem Antriebsmotor 4, einem Verbrennungsmotor, der beispielsweise mittels Seilzug 5 in Betrieb setzbar ist. Der Antriebsmotor 4 ist durch ein zuschaltbares Getriebe 6 mit der Arbeitswelle 2 in Verbindung bringbar und treibt konstant eine Hydraulikpumpe 7 für den Betrieb der Fahrachse 3 und eine Lenkanordnung an, die mit dem Bezugszeichen 51 angedeutet ist, wobei der Antrieb der strichpunktiert angedeuteten Räder 8 der Arbeitsmaschine 1 durch mit der Hydraulikpumpe 7 mittels Oelleitungen (der Uebersichtlichkeit wegen nicht gezeichnet) verbundene Hydraulikmotoren 11 erfolgt. Antriebsmotor 4, Getriebe 6, Hydaulikpumpe 7 und eine Lenkvorrichtung 9 (Lenkholmen) resp. Eine nicht näher beschriebene Lenkventilanordnung 51 werden von einem Maschinengehäuse 10 getragen. Von letzterem stehen beidseits Achsstummel 12 ab, in denen die Hydraulikmotoren 11 angeordnet und letzteren zugeordnete Räder 8 gelagert sind. Fig. 4 zeigt die Radlagerung an den freien Enden der Achsstummel 12 und die Fahrachse 3, die von der vorliegenden Erfindung nicht direkt betroffen ist.

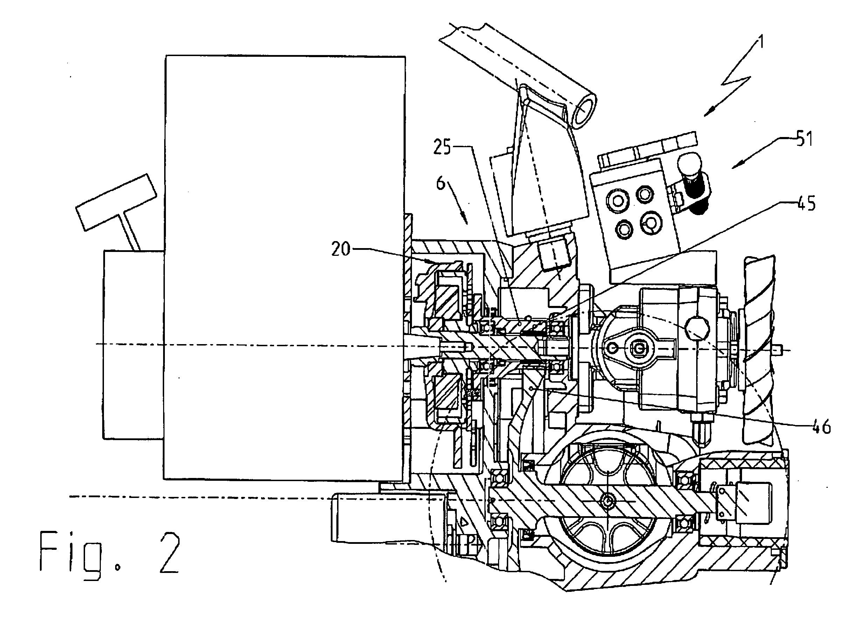

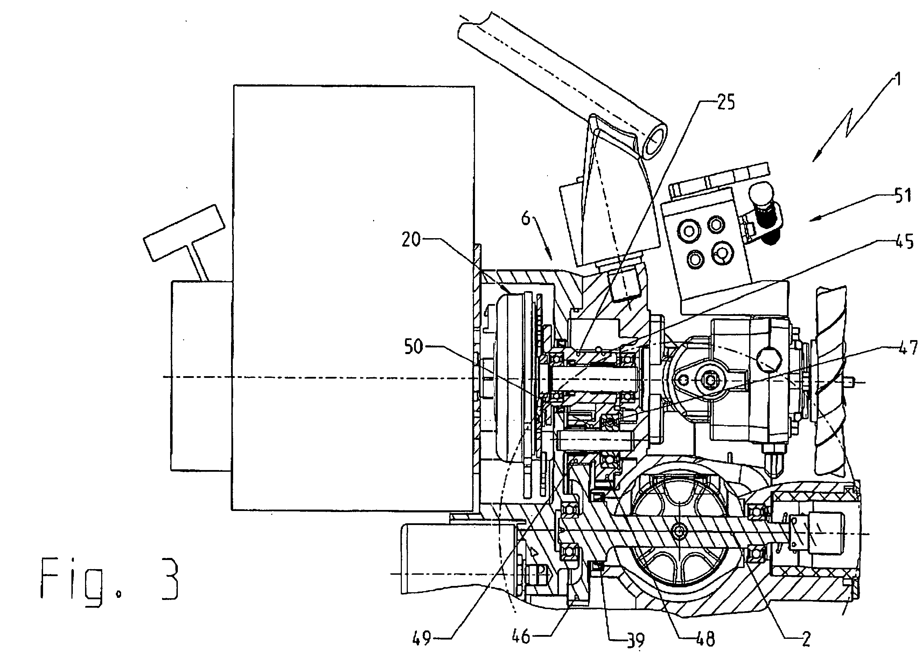

Die insbesondere durch Längsschnitte in den Fig. 1 bis 3 und 5 dargestellten unterschiedlichen Antriebsanordnungen weisen einen Antriebsmotor 4, eine mit dessen Motorwelle 14 über eine Zwischenwelle 13 antriebsverbundene Hydraulikpumpe 7 zum Antrieb der Räder 8 an der Fahrachse 3 sowie ein zuschaltbares Getriebe 6 für die Arbeitswelle 2 auf. Die Zwischenwelle 13 ist antriebsseitig mit einer kegeligen Verbindung zur Motorwelle 14 ausgestattet und wird mittels Gewindestift 15 auf letztere aufgezogen, wobei hierzu ein mehrkantiges Ende 16 an der Zwischenwelle 13 vorgesehen ist, das zum Verdrehen der Zwischenwelle 13 mittels Gabelschlüssel dient Weiterhin ist das gegenüberliegende Ende der Zwischenwelle 13 mit einer Bohrung ausgestattet, in die die Pumpenantriebswelle 17 der Hydraulikpumpe 7 ragt, auf der ein in eine Keilbahn der Bohrung eintauchender Keil 18 befestigt ist. Die Hydraulikpumpe 7 ist mittels Flansch 19 an dem Maschinengehäuse 10 befestigt. Auf der Zwischenwelle 13 sitzt dem Antriebsmotor 4 näherliegend eine Schaltkupplung 20, die ein- und ausschaltbar ist. Diese Schaltkupplung 20 ist dem Getriebe 6 zugeordnet, das mit der Arbeits- oder Zapfwelle 2 verbunden ist. Die in Fig 1 bis 3 veranschaulichte Schaltkupplung 20 ist eine elektromagnetische Kupplung und besteht aus einem dem Antriebsmotor 4 zugewandten stationären Kupplungsgehäuse 21, an dem ein mittels Schalter ein- und ausschaltbarer Elektromagnet 22 befestigt ist. Zur Befestigung des Kupplungsgehäuses 21 eignet sich beispielsweise das Maschinengehäuse 10. Die elektromagnetische Schaltkupplung 20 besteht weiterhin aus einem auf der Zwischenwelle 13 befestigten Kupplungsrotor 23 und eine bezüglich Elektromagnet 22 hinter dem Kupplungsrotor 23 angeordneten, im ausgeschalteten Kupplungszustand von dem Kupplungsrotor 23 antriebsgetrennte Ankerscheibe 24. Die achsiale Arretierung des Kupplungsrotors 23 an der Zwischenwelle 17 erfolgt durch eine Nutmutter 43. Die kreisrund ausgebildete Ankerscheibe 24 ist mit einer auf der Zwischenwelle 13 zweifach gelagerten Antriebsmuffe 25, über einen Flansch 27 mit letzterer fest verbunden und die Antriebsmuffe 25 ist am gegenüberliegenden Ende als Riemenrad 26 für Flach-, Zahn- oder Keilriemen ausgebildet, das Teil des Getriebes 6 ist. Wird der Elektromagnet 22 aktiviert, wird die Ankerplatte 24 an den Kupplungsrotor angezogen, sodass das Riemenrad 26 in Rotation versetzt wird. Das Maschinengehäuse 10 besitzt für in einer trockenen Umgebung betriebene Schaltkupplung 20 und das Getriebe 6 voneinander getrennte Kammern 28, 29 wobei die Kammern 28, 29 voneinander dicht getrennt sind, wenn das Getriebe 6 wie in den Fig. 2 und 3 gezeigt, als Zahnradgetriebe ausgebildet ist und die das Getriebe 6 umgebende Kammer 29 mit einem Schmierstoff angereichert ist. Hierzu ist im Maschinengehäuse 10 eine Trennwand 30 vorgesehen, die eine auf die Antriebsmuffe 25 einwirkende Wellendichtung 32 aufweist. Eine weitere Wellendichtung 31 verhindert einen Schmierstoffabfluss aus der Gefiriebekammer 29 zwischen Antriebsmuffe 25 und Zwischenwelle 13. Der Antriebsmotor 4 ist an einer zur Kupplungskammer 28 gehörende Abdeckplatte 33 an dem Maschinengehäuse 10 befestigt. Um die Anbaugeräte mit der Arbeitswelle 2 nach einem Ausschalten der Schaltkupplung 20 kurzfristig abbremsen zu können, sind in der Kupplungskammer 28 ein- oder mehrere auf die Ankerplatte 24 einwirkende Bremsvorrichtungen 34 an dem Maschinengehäuse 10 oder dem Kupplungsgehäuse 21 befestigt. Das Maschinengehäuse 10 resp. die Getriebekammer 28 ist zur Lagerung des einen Endes der Arbeitswelle 2 ausgebildet. Hierzu ist ein Wälzlager 35 im Maschinengehäuse 10 vorgesehen. An einen Lagerzapfen 36 der Arbeitswelle 2 schliesst ein Riemenpulley 37 an, das an der Arbeitswelle 2 befestigt und mittels Antriebsriemen 38 mit dem Riemenrad 26 antriebsverbunden ist. Hierzu ist das Maschinengehäuse 10 gegenüber der Arbeitswelle 2 mit einer weiteren Wellendichtung 39 versehen. Das Maschinengehäuse 10 ist zweiteilig ausgebildet, wobei der dem Antriebsmotor 4 zugewandte Teil das Kupplungsgehäuse 61 und der daran angebaute Teil das Getriebegehäuse 62 bilden. Anstelle eines Riemengetriebes könnte auch ein Kettengetriebe verwendet werden, das aufgrund seiner Bekanntheit hier nicht detailliert beschrieben ist.

Die Fig. 1 bis 3 zeigen auch die von der oben beschriebenen Lagerung gegenüberstehende Lagervorrichtung 40 der Arbeitswelle 2. Hierzu ist an dem Maschinengehäuse 10 ein vorstehender Stutzen 41 befestigt, mit dem das Kupplungsende 42 der Arbeitswelle 2 auch geschützt wird.

Die Fig. 2 veranschaulicht eine Arbeitsmaschine 1 der oben beschriebenen Art mit dem Unterschied, dass das Getriebe 6 als einstufiges Zahnradgetriebe mit einem treibenden Zahnrad 45 und einem mit diesem kämmend angetriebenen Zahnrad 46 ausgebildet ist, wobei das treibende Zahnrad 45 an dem von der Schaltkupplung 20 abgewandten Ende der Antriebsmuffe 25 befestigt ist.

In Fig. 3 ist eine Arbeitsmaschine 1 mit einem wenigstens zweistufigen Zahnradgetriebe 6 dargestellt. Ein einenends an der Antriebsmuffe 25 sitzendes Zahnrad 45, das über ein Zwischengelege 47 mit einem an der Arbeitswelle 2 befestigten Zahnrad 46 antriebsverbunden ist. Das Zwischengelege 47 besteht aus einer zwei unterschiedliche Zahnräder 48, 49 aufweisenden Zahnräderwelle 50, wobei Zahnrad 48 mit Zahnrad 45 und Zahnrad 49 mit Zahnrad 46 kämmt.

Fig. 4 zeigt wichtige Teile der Arbeitsmaschine 1 von der Frontseite aus, die mit den in den Fig. 1 bis 3 verwendeten Bezugszeichen übereinstimmen.

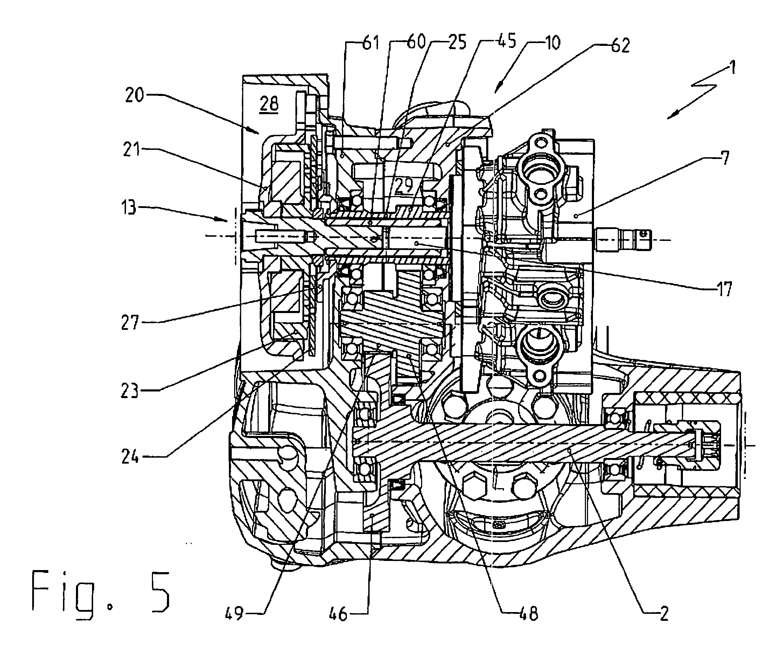

Fig. 5 veranschaulicht eine Ausführungsform der Arbeitsmaschine 1, bei der die Zwischenwelle 13 zweiteilig ausgebildet ist. Zu diesem Zweck weist die Zwischenwelle 13 an dem von der Schaltkupplung 20 abgewandten Wellenende ein formschlüssig aufgeschobenes Aufsteckelement 60 auf, mit dem auch die eingesteckte Antriebswelle 17 der Hydraulikpumpe 7 formschlüssig verbunden ist und auf dem die mit dem Kupplungsrotor 23 in Antriebsverbindung bringbare Antriebsnuffe 25 drehbar gelagert ist. Diese wiederum ist in jeweils einem Gehäuseteil 61, 62 des Maschinengehäuses 10 zweifach gelagert. Die Funktion der Antriebsmuffe 25 entspricht neben der als Antriebsrad des Getriebes 6 auch der einer Hohlwelle.

Fig. 5 zeigt weiterhin ein Zahnradgetriebe 6 mit einem Zwischengelege 47, wie es schon in der Ausführung nach Fig. 3 verwendet wird. Die mehrteilige Zwischenwelle 13 mit dem Aufsteckelement 60 bildet aber kein Hindernis für eine Getriebeanordnung wie mit den Fig. 1 und 2 dargestellt. Durch das zweiteilige Maschinengehäuse 10 kann wie Fig. 5 darstellt, eine öldichte Getriebekammer 29 gebildet werden.

Eine Ausführung nach Fig. 5 erweist sich bei der Montage und dem Unterhalt der Antriebskomponenten und Ersatzteile als vorteilhaft, weil die Zugänglichkeit optimal und der Zusammenbau wie auch die Demontage einfach sind. Die Uebertragung der Antriebskräfte an der zweiteiligen Zwischenwelle 13 erfolgt durch wenigstens einen Keil oder einem nach der Art einer Mehrfachkeilwelle ausgebildeten Antriebsorgan, die nicht dargestellt sind, und auf die Antriebswelle 17 der Hydraulikpumpe 7 durch eine Keilverbindung zwischen Aufsteckelement 60 und Antriebswelle 17.

Das Aufsteckelement 60 ist rohrförmig ausgebildet und weist innenseitig jeweils wenigstens eine dem Abschnitt der Zwischenwelle 13 aufgrund der zweiteiligen

Ausführung letzterer, und zur Antriebsverbindung mit der Hydraulikpumpe 7 zugeordnete Keilbahn auf. Selbstverständlich wäre es möglich, die Formschlüssigkeit durch einen mehrkantigen oder Polygon-Querschnitt der zusammengesteckten Teile herzustellen. Die entlang der Zwischenwelle 13 resp. entlang des Aufsteckelementes 60 angeordnete Antriebsmuffe 25 ist als Hohlwelle ausgebildet und im Maschinengehäuse 10 zweifach gelagert, wobei die Lagerstellen vorliegend jeweils auf ein Gehäuseteil 61, 62 des zweiteiligen Maschinengehäuses 10 verteilt sind. Dabei sind die Gehäuseteile 61, 62 so ausgelegt, dass sie eine Gehäusekammer 29 für das Getriebe 6 bilden, die auch als Oelkammer für ein Schmiermittel benutzbar ist. Wellendichtungen können auf der von der Gehäusekammer 29 abgewandten Seite der Wälzlager der Antriebsmuffe 25 in den Gehäuseteilen 61, 62 angeordnet sein.

## Patentansprüche

1. Selbstfahrende, lenkbare Arbeitsmaschine (1) für das Fortbewegen und/oder Antreiben von Arbeitsgeräten, mit einem Antriebsmotor (4) und wenigstens einer von diesem hydraulisch oder elektrisch antreibbaren, beidseits eines Maschinengehäuses (10) quer zur Fortbewegungsrichtung in abstehend befestigten Achsstummeln (12) gelagerten Fahrachse (3), an deren freien Enden jeweils ein mittels Hydraulikpumpe (7) von einem Hydraulikmotor (11) oder ein mittels Generator von einem Elektromotor angetriebenes, mit einer in den Achsstummeln (12) gelagerten Antriebswelle verbundenes Rad (8) angeordnet ist, und einer mit dem Antriebsmotor (4) mittels zuschaltbarem, ein- oder mehrstufigen Getriebe (6) verbindbaren, in dem Maschinengehäuse (10) gelagerten Arbeitswelle (2) für die an dem Maschinengehäuse (10) befestigbaren Arbeitsgeräte, wobei eine Motorwelle (14) mit der Pumpenresp. Generatorantriebswelle (17) sowie mittels kuppelbarem Kupplungsrotor (23) einer Schaltkupplung (20) mit einem Antriebsrad (26, 45) des Getriebes (6) antriebsver bunden ist, **dadurch gekennzeichnet, dass** das Maschinen- , gehäuse (10) eine Trennwand (30) zwischen zwei trennbaren Gehäuseteilen (61, 62) aufweist, derart, dass der eine Gehäuseteil (61) als Kupplungskammer (28) in der die Schaltkupplung (20) angeordnet ist, und der andere Gehäuseteil (62) als Getriebekammer (29) ausgebildet ist, in der das Getriebe (6) angeordnet ist, und dass der andere Gehäuseteil (62) zur einseitigen Lagerung einer Motorwelle (14) und Pumpenantriebswelle (17) koaxial verbindenden Zwischenwelle (13) vorgesehen ist und dass eine mit einem Kupplungsrotor (23) der Schaltkupplung (20) verbundene und auf der Zwischenwelle (13) gelagerte Antriebsmuffe (25) die Trennwand (30) durchsetzt.

2. Arbeitsmaschine (1) nach Anspruch 1, **dadurch gekennzeichnet, dass** der Antriebsmotor (4) an der Kupplungskammer (28) des Maschinengehäuses (10) befestigt ist.

3. Arbeitsmaschine (1) nach Anspruch 1 oder 2, **dadurch gekennzeichnet, dass** die Getriebekammer (29) zur einseitigen Lagerung der Arbeitswelle (2) ausgebildet ist.

4. Arbeitsmaschine (1) nach Anspruch 3, **dadurch gekennzeichnet, dass** an der von der einen Lagerung der Arbeitswelle (2) abgekehrten Seite eine näherungsweise der Getriebekammer (29) und auf die Arbeitswelle (2) einwirkende Wellendichtung (39) vorgesehen ist.

5. Arbeitsmaschine nach einem der Ansprüche 1 bis 4, **dadurch gekennzeichnet, dass** die Antriebsmotor (4) und Hydraulikpumpe (7) verbindende Zwischenwelle (13) durch ein in Achsiairichtung auf einen Längsabschnitt der Zwischenwelle (13) formschlüssig verbindbares resp. aufschiebbares, und die Antriebswelle (17) der Hydraulikpumpe (7) formschlüssig einsteckbar verbindendes Aufsteckelement (60) ausgebildet ist.

6. Arbeitsmaschine nach Anspruch 5, **dadurch gekennzeichnet, dass** das rohrförmig ausgebildete Aufsteckelement (60) durch jeweils wenigstens einen Keil mit dem Längsabschnitt der Zwischenwelle (13) einerseits und der Antriebswelle (17) der Hydraulikpumpe (7) andererseits verbunden ist.

7. Arbeitsmaschine nach einem der Ansprüche 1 bis 6, **dadurch gekennzeichnet, dass** die Gehäuseteile (61, 62) eine das Getriebe (6) umgebende Getriebekammer (29) bilden.

8. Arbeitsmaschine (1) nach einem der Ansprüche 1 bis 7, **dadurch gekennzeichnet, dass** die Schaltkupplung (20) als elektromagnetische Kupplung ausgebildet ist, die einen dem Kupplungsrotor (23) zugewandten, von einem stationären Kupplungsgehäuse (21) getragenen Elektromagneten (22) und eine auf der gegenüberliegenden Seite des Kupplungsrotors (23) angeordnete, mit dem Antriebsrad (26, 45) des Getriebes (6) verbundene Ankerscheibe (24) aufweist.

9. Arbeitsmaschine (1) nach Anspruch 8, **dadurch gekennzeichnet, dass** die Ankerscheibe (24) mit einer auf der Zwischenwelle (13) lagernden Antriebsmuffe (25) verbunden ist.

10. Arbeitsmaschine nach Anspruch 9, **dadurch gekennzeichnet, dass** die Antriebsmuffe (25) als Hohlwelle ausgebildet ist.

11. Arbeitsmaschine (1) nach Anspruch 9 oder 10, **dadurch gekennzeichnet, dass** das an der Antriebsmuffe (25) befestigte Antriebsrad (26, 45) des Getriebes (6) als Riemenrad, Ketten- oder Zahnrad ausgebildet ist.

12. Arbeitsmaschine (1) nach einem der Ansprüche 9 bis 11, **dadurch gekennzeichnet, dass** die Antriebsmuffe (25) durch ein flanschartiges Ende (27) mit dem Kupplungsrotor (23) verbunden ist.

13. Arbeitsmaschine (1) nach einem der Ansprüche 8 bis 12, **dadurch gekennzeichnet, dass** zwischen Kupplungs (28)- und Getriebekammer (29) eine Trennwand (30) zur Aufnahme einer auf die Antriebsmuffe (25), und in der Antriebsmuffe (25) eine auf die Zwischenwelle (13) einwirkende Wellendichtung (31, 32) angeordnet ist.

14. Arbeitsmaschine (1) nach einem der Ansprüche 8 bis 13, **dadurch gekennzeichnet, dass** an der der Schaltkupplung (20) zugewandten Trennwand (30) der Kupplungskammer (28) oder dem Kupplungsgehäuse (21) eine auf die Ankerplatte (24) einwirkende Bremsvorrichtung (34) befestigt ist.

15. Arbeitsmaschine (1) nach Anspruch 14, **dadurch gekennzeichnet, dass** die Bremsvorrichtung (34) mit einem auf einen Bremsschuh einwirkenden Permanentmagnet ausgebildet ist, wobei der Bremsschuh benachbart zur Ankerscheibe (24) angeordnet ist.

16. Arbeitsmaschine nach einem der Ansprüche 8 bis 15, **dadurch gekennzeichnet, dass** die entlang der Zwischenwelle (13) angeordnete, als Hohlwelle ausgebildete Antriebsmuffe (25) im Maschinengehäuse (10) zweifach gelagert ist.

17. Arbeitsmaschine nach Anspruch 16, **dadurch gekennzeichnet, dass** die Antriebsmuffe (25) jeweils in einem Gehäuseteil (61, 62) des zweiteilig ausgebildeten Maschinengehäuses (10) gelagert ist.

## Claims

1. Self-propelled, steerable working machine (1) for moving and/or driving implements, comprising a drive motor (4) and at least one axle (3) which can be driven hydraulically or electrically thereby and which is mounted on either side of a machine housing (10) transversely to the direction of movement in axle stubs (12) secured in such a manner that they project, a wheel (8) driven by means of the hydraulic pump (7) of a hydraulic motor (11) or by means of the generator of an electric motor and connected to a drive shaft mounted in the axle stubs (12) being arranged at each of the free ends of the said axle, and comprising an output shaft (2) for the implements that can be secured to the machine housing (10), which output shaft is mounted in the machine housing (10) and can be connected to the drive motor (4) by means of a selectable single-stage or multi-stage gear unit (6), a motor shaft (14) being operatively connected to the pump or generator drive shaft (17) and, by means of the engageable rotor (23) of a clutch (20), to a drive wheel (26, 45) of the gear unit (6), **characterised in that** the machine housing (10) has a partition wall (30) between two separable housing parts (61, 62), such that one housing part (61) is designed as a chamber (28) in which the clutch (20) is arranged and the other housing part (62) is designed as a chamber (29) in which the gear unit (6) is arranged, and that the other housing part (62) is intended for the unilateral mounting of an intermediate shaft (13) connecting the motor shaft (14) and the pump drive shaft (17) and that a drive coupling (25) connected to the rotor (23) of the clutch (20) and mounted on the intermediate shaft (13) traverses the partition wall (30).

2. Working machine (1) according to claim 1, **characterised in that** the drive motor (4) is secured to the clutch chamber (28) of the machine housing (10).

3. Working machine (1) according to claim 1 or claim 2, **characterised in that** the gear unit chamber (29) is designed for the unilateral mounting of the output shaft (2).

4. Working machine (1) according to claim 3, **characterised in that** a shaft seal (39) approximately at the gear unit chamber (29) and acting on the output shaft (2) is provided on the side directed away from the unilateral mounting of the output shaft (2).

5. Working machine according to one of claims 1 to 4, **characterised in that** the intermediate shaft (13) connecting the drive motor (4) and the hydraulic pump (7) is formed by a slip-on element (60) which can be positively connected to or slipped on to a longitudinal portion of the intermediate shaft (13) in the axial direction and which connects the drive shaft (17) of the hydraulic pump (7) in such a manner that it can be positively inserted.

6. Working machine according to claim 5, **characterised in that** the tubular slip-on element (60) is connected at one end by means of at least one spline to the longitudinal portion of the intermediate shaft (13) and at the other end to the drive shaft (17) of the hydraulic pump (7).

7. Working machine according to one of claims 1 to 6, **characterised in that** the housing parts (61, 62) form a chamber (29) surrounding the gear unit (6).

8. Working machine (1) according to one of claims 1 to 7, **characterised in that** the clutch (20) is designed as an electromagnetic clutch having an electromagnet (22) carried by a stationary clutch housing (21) and directed towards the rotor (23) and an armature plate (24) arranged on the opposite side of the rotor (23) and connected to the drive wheel (26, 45) of the gear unit (6).

9. Working machine (1) according to claim 8, **characterised in that** the armature plate (24) is connected to a drive coupling (25) mounted on the intermediate shaft (13).

10. Working machine according to claim 9, **characterised in that** the drive coupling (25) is designed as a hollow shaft.

11. Working machine (1) according to claim 9 or claim 10, **characterised in that** the drive wheel (26, 45) of the gear unit (6) connected to the drive coupling (25) is designed as a pulley, sprocket or gear.

12. Working machine (1) according to one of claims 9 to 11, **characterised in that** the drive coupling (25) is connected by means of a flange-like end (27) to the clutch rotor (23).

13. Working machine (1) according to one of claims 8 to 12, **characterised in that** a partition wall (30) for receiving a shaft seal (31, 32) acting on the drive coupling (25) and, in the drive coupling (25), on the intermediate shaft (13) is arranged between the clutch chamber (28) and the gear unit chamber (29).

14. Working machine (1) according to one of claims 8 to 13, **characterised in that** a braking device (34) acting on the armature plate (24) is secured to the partition wall (30) of the clutch chamber (28) directed towards the clutch (20) or to the clutch housing (21).

15. Working machine (1) according to claim 14, **characterised in that** the braking device (34) is designed with a permanent magnet acting on a brake shoe, the brake shoe being arranged adjacent to the armature plate (24).

16. Working machine according to one of claims 8 to 15, **characterised in that** the drive coupling (25) designed as a hollow shaft and arranged along the intermediate shaft (13) is dual-mounted in the machine housing (10).

17. Working machine according to claim 16, **characterised in that** the drive coupling (25) is mounted in one housing part (61, 62) of the two-part machine housing (10).

## Revendications

1. Véhicule de travail (1) automoteur et dirigeable, dévolu à la progression et/ou à l'entraînement d'appareils de travail, comprenant un moteur d'entraînement (4) ; au moins un essieu (3) qui peut être entraîné hydrauliquement ou pneumatiquement par ledit moteur, est monté de part et d'autre d'un carter (10) du véhicule transversalement par rapport à la direction de progression, dans des tourillons (12) fixés en saillie, et aux extrémités libres duquel se trouve une roue respective (8) reliée à un arbre menant monté dans lesdits tourillons (12), et entraînée par un moteur hydraulique (11) au moyen d'une pompe hydraulique (7), ou par un moteur électrique au moyen d'un générateur ; et un arbre de travail (2) qui est affecté aux appareils de travail pouvant être fixés au carter (10) du véhicule, est logé dans ledit carter (10) du véhicule et peut être relié au moteur d'entraînement (4) au moyen d'une transmission (6) à étage(s) simple ou multiples, apte à la mise en circuit, un arbre (14) dudit moteur étant en liaison d'entraînement avec l'arbre menant respectif (17) de la pompe ou du générateur, ainsi qu'avec une roue menante (26, 45) de la transmission (6), au moyen d'un rotor embrayable d'accouplement (23) d'un embrayage sélecteur (20), **caractérisé par le fait que** le carter (10) du véhicule présente une cloison séparatrice (30) entre deux parties dissociables (61, 62) dudit carter, de façon telle que l'une (61) desdites parties du carter se présente comme un logement (28) d'embrayage, dans lequel l'embrayage sélecteur (20) est disposé, et que l'autre partie (62) dudit carter se présente comme un logement (29) de transmission, dans lequel la transmission (6) est disposée ; **par le fait que** ladite autre partie (62) du carter est prévue pour le montage unilatéral d'un arbre intermédiaire (13) instaurant la liaison coaxiale de l'arbre (14) du moteur et de l'arbre menant (17) de la pompe ; et **par le fait qu'**un manchon d'entraînement (25), monté sur ledit arbre intermédiaire (13) et relié à un rotor d'accouplement (23) dudit embrayage sélecteur (20), traverse ladite cloison séparatrice (30).

2. Véhicule de travail (1) selon la revendication 1, **caractérisé par le fait que** le moteur d'entraînement (4) est fixé au logement (28) d'embrayage du carter (10) dudit véhicule.

3. Véhicule de travail (1) selon la revendication 1 ou 2, **caractérisé par le fait que** le logement (29) de transmission est réalisé en vue du montage unilatéral de l'arbre de travail (2).

4. Véhicule de travail (1) selon la revendication 3, **caractérisé par le fait qu'**une garniture d'étanchement (39), prévue du côté tourné à l'opposé de l'une des portées de l'arbre de travail (2) et rapprochée du logement (29) de transmission, agit sur ledit arbre de travail (2).

5. Véhicule de travail selon l'une des revendications 1 à 4, **caractérisé par le fait que** l'arbre intermédiaire (13), reliant le moteur d'entraînement (4) et la pompe hydraulique (7), est réalisé sous la forme d'un élément emboîtable (60) qui peut être respectivement enfilé sur un segment longitudinal dudit arbre intermédiaire (13) ou relié audit segment par complémentarité de formes, dans le sens axial, et instaure la liaison de l'arbre menant (17) de ladite pompe hydraulique (7), avec faculté d'emboîtement à complémentarité de formes.

6. Véhicule de travail selon la revendication 5, **caractérisé par le fait que** l'élément emboîtable (60), de réalisation tubulaire, est relié au segment longitudinal de l'arbre intermédiaire (13), d'une part, et à l'arbre menant (17) de la pompe hydraulique (7), d'autre part, par l'intermédiaire d'au moins un coin respectif.

7. Véhicule de travail selon l'une des revendications 1 à 6, **caractérisé par le fait que** les parties (61, 62) du carter forment un logement (29) de transmission, qui ceinture la transmission (6).

8. Véhicule de travail (1) selon l'une des revendications 1 à 7, **caractérisé par le fait que** l'embrayage sélecteur (20) est réalisé sous la forme d'un embrayage électromagnétique comprenant un électro-aimant (22), pointant vers le rotor d'accouplement (23) et porté par un carter fixe (21) dudit embrayage ; et un disque d'induit (24) situé du côté opposé dudit rotor d'accouplement (23) et relié à la roue menante (26, 45) de la transmission (6).

9. Véhicule de travail (1) selon la revendication 8, **caractérisé par le fait que** le disque d'induit (24) est relié à un manchon d'entraînement (25) calé sur l'arbre intermédiaire (13).

10. Véhicule de travail selon la revendication 9, **caractérisé par le fait que** le manchon d'entraînement (25) est réalisé sous la forme d'un arbre creux.

11. Véhicule de travail (1) selon la revendication 9 ou 10, **caractérisé par le fait que** la roue menante (26, 45) de la transmission (6), fixée au manchon d'entraînement (25), est réalisée sous la forme d'une poulie, d'un pignon à chaîne ou d'une roue dentée.

12. Véhicule de travail (1) selon l'une des revendications 9 à 11, **caractérisé par le fait que** le manchon d'entraînement (25) est relié au rotor d'accouplement (23) par une extrémité (27) du type collerette.

13. Véhicule de travail (1) selon l'une des revendications 8 à 12, **caractérisé par le fait qu'**une cloison séparatrice (30) est interposée entre le logement (28) d'embrayage et le logement (29) de transmission, en vue de recevoir un système d'étanchement (31, 32) agissant, respectivement, sur le manchon d'entraînement (25) et sur l'arbre intermédiaire (13) dans ledit manchon d'entraînement (25).

14. Véhicule de travail (1) selon l'une des revendications 8 à 13, **caractérisé par le fait qu'**un dispositif de freinage (34), agissant sur la platine d'induit (24), est fixé à la cloison séparatrice (30) du logement (28) d'embrayage qui est tournée vers l'embrayage sélecteur (20), ou au carter (21) dudit embrayage.

15. Véhicule de travail (1) selon la revendication 14, **caractérisé par le fait que** le dispositif de freinage (34) est pourvu d'un aimant permanent agissant sur un patin de freinage, ledit patin de freinage occupant une position voisine du disque d'induit (24).

16. Véhicule de travail selon l'une des revendications 8 à 15, **caractérisé par le fait que** le manchon d'entraînement (25), disposé le long de l'arbre intermédiaire (13) et réalisé sous la forme d'un arbre creux, est installé avec montage double dans le carter (10) dudit véhicule.

17. Véhicule de travail selon la revendication 16, **caractérisé par le fait que** le manchon d'entraînement (25) est monté dans une partie respective (61, 62) du carter (10) dudit véhicule, réalisé en deux parties.
